# EUROPÄISCHE PATENTSCHRIFT

(11) **EP 1 486 030 B1**
(45) Veröffentlichungstag und Bekanntmachung des Hinweises auf die Patenterteilung: **26.07.2006**
(21) Anmeldenummer: 03706277.5
(22) Anmeldetag: 05.02.2003
(51) Int. Cl.: H04L 12/26

(54) **VERFAHREN ZUR ÜBERTRAGUNG VON MESSDATEN VON EINEM MESSRECHNER ZU EINEM STEUERRECHNER EINES MESSSYSTEMS**
METHOD FOR THE TRANSMISSION OF MEASURED DATA FROM A MEASURING COMPUTER TO A CONTROL COMPUTER IN A MEASURING SYSTEM
PROCEDE DE TRANSMISSION DE DONNEES DE MESURE D'UN ORDINATEUR DE MESURE A UN ORDINATEUR DE COMMANDE D'UN SYSTEME DE MESURE

(30) Priorität: 12.03.2002 DE 10210712
(43) Veröffentlichungstag der Anmeldung: 15.12.2004
(73) Patentinhaber: Deutsche Telekom AG, 53113 Bonn (DE)
(72) Erfinder: WIDERA, Ralf, 64347 Griesheim (DE); HEIDEMANN, Cornelius, 64283 Darmstadt (DE); MENDE, Joachim, 64347 Griesheim (DE); DÖRKEN, Heinrich, 64293 Darmstadt (DE)
(86) Internationale Anmeldenummer: PCT/DE2003/000317
(87) Internationale Veröffentlichungsnummer: WO 2003/077472

(56) Entgegenhaltungen:
- EP-A- 1 039 691
- EP-A- 1 146 687
- US-A- 5 751 964
- US-A- 6 108 782
- S. WALDBUSSER: "RFC 1757 - Remote Network Monitoring Management Information Base" RFC - REQUEST FOR COMMENTS, 1. Februar 1995 (1995-02-01), XP002113096 Gefunden im Internet: <URL:http://www.ietf.org/rfc/rfc1757.txt> [gefunden am 1999-08-24]

## Beschreibung

Die Erfindung betrifft ein Verfahren zur Übertragung von Messdaten von einem Messrechner zu einem Steuerrechner eines Messsystems gemäß der im Oberbegriff des Anspruches 1 angegebenen Art sowie eine Anordnung zur Durchführung des Verfahrens gemäß dem Anspruch 8.

Aus der nicht vorveröffentlichten deutschen Patentanmeldung DE 100 46 240.5 ist ein Messsystem zur Messung der Internet-Protokoll(IP)-Performance-Parameter, wie Einwegverzögerung, Laufzeitschwankungen und Paketverluste, in IP-Netzen bekannt. Die nicht vorveröffentlichte deutsche Patentanmeldung DE 101 28 927.8 hat ein Verfahren zum Gegenstand, das in dem Messsystem die Erzeugung von Zeitstempeln auch bei kurzzeitig blockiertem Zugriff auf eine Referenzuhr ermöglicht.

Bei dem diesen Patentanmeldungen zugrunde liegenden Messsystem handelt es sich um ein verteiltes Messsystem, d. h. die einzelnen Komponenten des Messsystems sind örtlich verteilt und über ein Telekommunikationsnetz miteinander verbunden. Das Messsystem umfasst dabei mindestens zwei Messrechner, eine Datenbank, in die die Messergebnisse und die Konfiguration des Messsystems abgelegt werden, einen Steuerrechner, der die Messrechner für die Ermittlung des Messergebnisses steuert sowie diverse grafische Benutzerschnittstellen, insbesondere für die Konfiguration des Messsystems und für die Visualisierung der gewonnenen Messergebnisse.

Für die Durchführung des Messverfahrens wird zwischen mindestens zwei Messrechnern eine unidirektionale Messstrecke eingerichtet. Auf dieser Messstrecke werden Messpakete mit einer konfigurierbaren zeitlichen Verteilung von einem ersten Messrechner zu einem zweiten Messrechner gesendet.

Dabei wird der Abgang des Messpaketes von dem ersten Messrechner erfasst, d. h. ein erster Zeitstempel wird erstellt. Dieser erste Zeitstempel wird zusammen mit dem Messpaket und sonstigen Daten, wie beispielsweise Sequenznummern, an den zweiten Messrechner übertragen. Der zweite Messrechner erfasst den Eingang des Messpaketes und generiert einen zweiten Zeitstempel.

Um die Einwegverzögerung, die sich aus der Differenz der beiden Zeitstempel ergibt, hinreichend genau bestimmen zu können, müssen die von den Messrechnern erzeugten Zeitstempel hinreichend genau synchronisiert sein. Die Generierung der Zeitstempel kann dabei durch ein als Zeitquelle fungierendes Satellitensystem, beispielsweise GPS (Global Positioning System), oder aus lokalen Uhren erfolgen, die mittels NTP (Network Time Protocol) synchronisiert werden.

Die Messergebnisse werden als Messdaten durch den Steuerrechner von dem zweiten Messrechner abgerufen, in einer Datenbank abgelegt und dort zur Visualisierung bereitgestellt. Die Anzeige der Messdaten und des Systemstatus kann wahlweise mittels Offline-Anzeige oder mittels Online-Anzeige erfolgen. Offline-Anzeige bedeutet dabei, dass die Anzeige der Messdaten mittels eines Browsers manuell initiiert werden muss, während bei der Online-Anzeige die Anzeige automatisch in einem bestimmten Zeitintervall aktualisiert und angezeigt wird. Hierfür werden die oben erwähnten grafischen Benutzerschnittstellen und -Oberflächen verwendet.

Die Konfiguration des Messsystems erfolgt ebenfalls mit Hilfe der bereits angesprochenen grafischen Benutzerschnittstelle. Hierfür macht der Nutzer Eingaben über die Art und den Verlauf der Messung. Die getroffenen Eingaben werden in der Datenbank abgelegt; der Steuerrechner liest diese Konfigurationsdaten aus, konfiguriert die Messrechner entsprechend und startet bzw. stoppt die Messverbindungen gemäß diesen Daten.

Dokument EP-A-1146687 offenbart ein System zur Übertragung von Messdaten, welche durch die Verwendung eines statistischen Modells reduziert bzw. konzentriert werden. Die Rohdaten werden zu einem Datensammler gesendet, welcher diese an einen Server zur Analyse weitersendet. Dort wird ein statistisches Modell auf die Daten angewendet und das Resultat gespeichert. Als mögliche statistische Modelle werden Durchschnitt, Varianz und Standardabweichung angegeben.

Je nach Ausbaustufe und Konfiguration des Messsystems können sehr große Datenmengen anfallen, woraus sich folgende Probleme ergeben:
a) Nachdem es sich um ein örtlich verteiltes Messsystem handelt, müssen die Messdaten potenziell über dasselbe Netz übertragen werden, das messtechnisch überprüft werden soll, was wiederum die Übertragungsqualität auf den Messstrecken nachteilig beeinflusst.
b) Die Übertragung der Messdaten kann aber auch die Messrechner so auslasten, dass die Messgenauigkeit leidet.
c) Bei der Speicherung aller einzelnen Messdaten in der Datenbank kann bei einer entsprechenden Ausbaustufe und Konfiguration des Messsystems leicht das sinnvoll handhabbare Datenvolumen überschritten werden, um einen Überblick über die zu treffenden Maßnahmen zur Qualitätssicherung zu behalten.

Der Erfindung liegt die Aufgabe zugrunde, ein Verfahren zur Übertragung von Messdaten von einem Messrechner zu einem Steuerrechner eines Messsystems derart weiter zu bilden, dass unter Vermeidung der genannten Nachteile zum einen die Datenmenge reduziert wird und zum anderen aber alle relevanten Informationen dem Nutzer zur Verfügung stehen.

Diese Aufgabe wird für das Verfahren durch die kennzeichnenden Merkmale des Anspruches 1 in Verbindung mit seinen Oberbegriffsmerkmalen und für die Vorrichtung durch den Anspruch 8 gelöst.

Die Unteransprüche bilden vorteilhafte Weiterbildungen der Erfindung.

Der Erfindung liegt die Erkenntnis zugrunde, dass durch Aggregierung von Messdaten über ein bestimmtes Zeitintervall sich die Menge an Messdaten reduzieren lässt.

Nach der Erfindung werden daher zur Reduzierung der Menge an Messdaten diese über ein vorbestimmtes Zeitintervall zu Kenngrößen zusammen gefasst und statt der zu Kenngrößen zusammen gefassten Messdaten diese Kenngrößen von dem Messrechner an den Steuerrechner übertragen.

Grundsätzlich gibt es verschiedene Möglichkeiten, die Datenmenge zu reduzieren. Gängige Datenkompressionsverfahren haben jedoch folgende Nachteile:
a) Verlustbehaftete Datenkompression, wie für Audio-/Video-Daten, ist bei Messergebnissen nicht anwendbar, da diese nach der Datenkompression nicht mehr vollständig sind und somit ihre Aussagekraft verlieren.
b) Verlustlose Datenkompression reduziert zwar die zu übertragende Datenmenge, löst aber nicht das Problem der Datenspeicherung und Datenauswertung, wenn die Daten dazu wieder dekomprimiert werden. Vielmehr vergrößert sich dadurch sogar der Aufwand bei der Datenauswertung, da jedes Mal erst dekomprimiert werden muss.

Nach der Erfindung werden die Daten nun aber so zusammen gefasst, dass alle für eine spätere statistische Auswertung erforderlichen Informationen erhalten bleiben und dennoch eine entsprechend bestimmbare Datenreduktion erzielt wird. Anstelle der eigentlichen Messdaten oder einer Komprimierung der Messdaten können gemäß einer Ausführungsform der Erfindung zu mehreren Messparametern Messdaten anfallen, die entsprechend dem jeweiligen Messparameter zu Kenngrößen zusammengefasst werden. Für jeden Messparameter werden somit verschiedene Kenngrößen erfasst, die jeweils für ein Zeitintervall ermittelt und dann an den Steuerrechner übertragen werden.

Vorzugsweise werden als Kenngrößen das Minimum, das Maximum, der Mittelwert, die Standardabweichung und/oder ähnliche statistische Werte der Messdaten über das zeitintervall verwendet.

Das zeitintervall für die Zusammenfassung von Messdaten zu Kenngrößen wird insbesondere in Abhängigkeit der Messaufgabe festgelegt.

Zwischen zwei Messrechnern werden Messpakete, insbesondere UDP-Messpakete (User Datagram Protocol), übertragen. Bei der Ermittlung von Messpaketverlusten in einem Zeitintervall wird als Kenngröße zum einen die Summe aller verloren gegangenen Pakete erfasst und zum anderen jeweils das Maximum aller nacheinander auftretenden Paketverluste als Kenngröße erfasst. Man spricht im zweiten Fall von sogenannten "Bursts".

Gemäß einer Ausführungsform der Erfindung wird ein Messsystem verwendet, das zur Ermittlung von unidirektionalen Übertragungseigenschaften und deren ableitbaren Ergebnissen dient. Hierbei arbeitet ein Messrechner als Sender und ein anderer Messrechner als Empfänger, wobei der andere Messrechner die Zusammenfassung der Messdaten zu Kenngrößen vornimmt und diese an den Steuerrechner überträgt.

Vorzugsweise werden als Kenngrößen die durchschnittliche Einwegverzögerung, die maximale und die minimale Einwegverzögerung, die durchschnittliche Laufzeitschwankung, die maximale Laufzeitschwankung, der Paketverlust und/oder der Durchsatz aus den Messdaten gebildet werden.

Dabei wird den Kenngrößen der Zeitpunkt der Zusammenfassung der Messdaten zu Kenngrößen zugeordnet.

Insbesondere wird ein Verfahren nach der DE 100 46 240.5, der DE 101 28 927.8 und/oder der am gleichen Tage eingereichten Anmeldungen der Anmelderin mit dem Titel "Verfahren zur Ausgabe von Zustandsdaten" und dem Titel "Verfahren zur Zeitsynchronisation von zumindest zwei miteinander über ein Telekommunikationsnetz, wie Internet, Intranet oder dergleichen, zusammenwirkenden Messrechnern" verwendet.

Die Erfindung zeichnet sich dadurch aus, dass auch bei reduzierter Menge an Messdaten die entscheidungserheblichen Informationen inhaltlich erhalten bleiben. Diese Reduktion ermöglicht eine parallele Verarbeitung vieler Messungen, wodurch ein komplexes Messsystem in einem Telekommunikationsnetz überhaupt erst ermöglicht wird.

Durch die frühzeitige dezentrale Aggregierung wird eine Übertragung von Messergebnissen von einem Messrechner zu einem Steuerrechner im gleichen Telekommunikationsnetz möglich. Die reduzierte Menge an Messdaten stellt nur noch eine vernachlässigbare Belastung des Messsystems und des Telekommunikationsnetzes dar, die aufgetreten wäre, wenn pro Messpaket ein Ergebnispaket versendet worden wäre. Gleichzeitig wird der Steuerrechner bei der Verarbeitung, Auswertung und Visualisierung der Messdaten von vielen Messungen entlastet.

Die Reduktion der Menge an Messdaten durch die Messrechner erlaubt eine Speicherung der Daten in der Datenbank, sodass diese auch für spätere Auswertungen zur Verfügung stehen. Ohne sinnvolle Reduzierung der Menge an Messdaten ist unter Umständen nur eine Echtzeitauswertung möglich, sofern diese bei vielen parallelen Messungen überhaupt durch die begrenzte Verarbeitungsgeschwindigkeit realisierbar ist, da die großen anfallenden Mengen an Messdaten nicht gespeichert werden können. Aufgrund der Reduktion auf Kenngrößen erlaubt das Messsystem Langzeitmessungen mit vielen parallelen Messungen.

Weitere Vorteile, Merkmale und Anwendungsmöglichkeiten der vorliegenden Erfindung zur Übertragung von Messdaten von einem Messrechner zu einem Steuerrechner eines Messsystems ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:
- Fig. 1: eine schematische Darstellung eines Telekommunikationsnetzes mit mehreren Messrechnern, die über verschiedene Zeitquellen verfügen zur Durchführung des Verfahrens nach der Erfindung und
- Fig. 2: eine schematische Darstellung einer Zusammenfassung von Messdaten zu Kenngrößen in einem Zeitintervall.

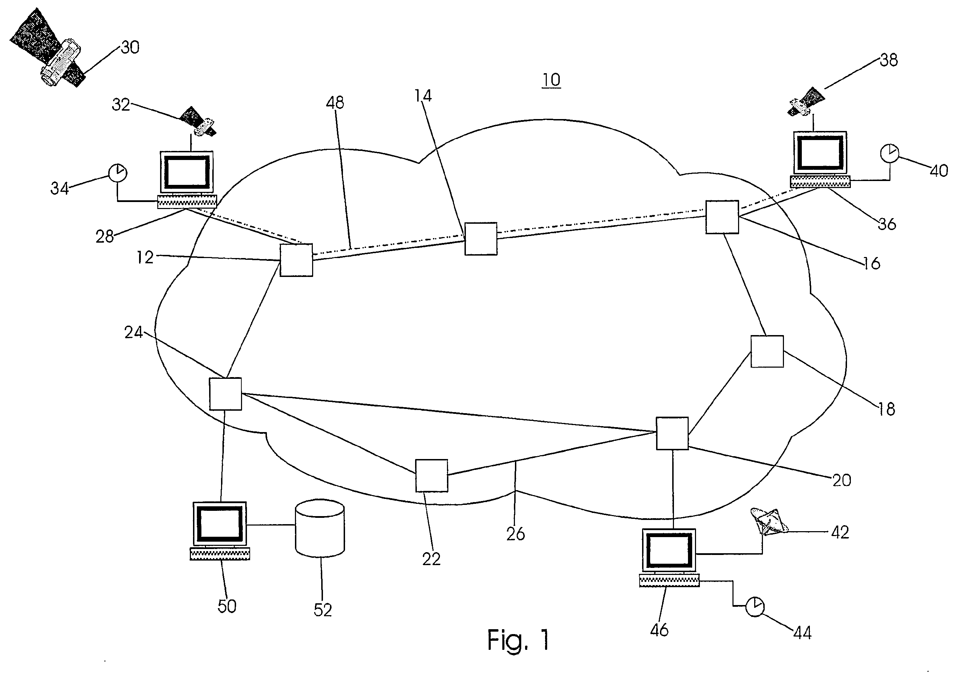

In Fig. 1 ist schematisch ein Telekommunikationsnetz 10 dargestellt, das mehrere Vermittlungseinrichtungen 12 bis 24 aufweist, die über Verbindungsleitungen 26 miteinander verbunden sind. Bei dem Telekommunikationsnetz 10 handelt es sich beispielsweise um das Internet.

Der Vermittlungsstelle 12 ist ein erster Messrechner 28 zugeordnet. Für den Empfang von Signalen, die von einem mehrere Satelliten 30 umfassenden Satellitensystem (GPS) ausgesendet werden, weist der erste Messrechner 28 eine GPS-Antenne 32, sowie eine - hier nicht explizit dargestellte - GPS-Karte zur Verarbeitung der empfangenen Signale auf. Die GPS-Antenne 32 und die nicht explizit dargestellte GPS-Karte bilden zusammen den zum Empfang der GPS-Signale notwendigen lokalen GPS-Empfänger des ersten Messrechners 28. Weiterhin ist in dem ersten Messrechner 28 eine lokale Uhr 34 integriert.

Ein zweiter Messrechner 36, der mit der Vermittlungseinrichtung 16 verbunden ist, weist ebenfalls eine GPS-Antenne 38 und eine lokale Uhr 40 auf. Den für den Empfang der GPS-Signale notwendigen lokalen GPS-Empfänger des zweiten Messrechners 36 bilden wiederum die GPS-Antenne 38 sowie eine hier nicht gezeigte, in den zweiten Messrechner 36 integrierte GPS-Karte.

Entsprechende Peripheriegeräte, nämlich eine GPS-Antenne 42 und eine lokale Uhr 44, sind einem dritten Messrechner 46, der an die Vermittlungseinrichtung 20 angeschlossen ist, zugeordnet. Auch hier bilden eine nicht weiter gezeigte GPS-Karte und die GPS-Antenne 42 einen für den Empfang der ausgesandten GPS-Signale notwendigen lokalen GPS-Empfänger des dritten Messrechners 46.

Die Messrechner 28, 36 und 46 empfangen über die bereits vorgestellten lokalen GPS-Empfänger fortlaufend die Weltzeit (UTC - Universal Coordinated Time). Der Einfachheit halber werden, wie bereits erwähnt, die GPS-Empfänger der Messrechner 28, 36, 46 als GPS-Uhr bezeichnet.

Die Verbindungsleitungen 26 vom ersten Messrechner 28 über die Vermittlungseinrichtungen 12, 14 und 16 zu dem zweiten Messrechner 36 bildet eine Messstrecke 48, die in der Zeichnung zur Verdeutlichung zweipunktstrichliert dargestellt ist.

Ein Steuerrechner 50, der mit einer Datenbank 52 zusammenwirkt, ist der Vermittlungseinrichtung 24 zugeordnet. Über den Steuerrechner 50 erfolgt die Steuerung der Messrechner 28, 36.

Zur Durchführung der Messung ist in jedem der Messrechner 28 und 36 ein Messprogramm zur Messung der Einwegverzögerung installiert.

Ziel der Messanordnung ist es, die Paketlaufzeit eines Messpaketes von dem ersten Messrechner 28 über die Messstrecke 48 zu dem zweiten Messrechner 36 zu ermitteln. Es handelt sich somit um eine unidirektionale Messverbindung, bei der einzelne Messpakete von dem ersten Messrechner 28 zu dem Messrechner 36 gesendet werden.

Die Messung der Einwegverzögerung erfolgt nach dem folgenden, vereinfachten Schema:

Ein Messpaket wird von dem ersten Messrechner 28 über die Messstrecke 48, also über die Verbindungsleitung 26, die Vermittlungsstelle 12, die Vermittlungsstelle 14 und der Vermittlungsstelle 16 zum zweiten Messrechner 36 gesendet.

Die Messpakete werden dabei insbesondere mit Hilfe des User Datagram Protocol (UDP) verschickt. UDP ist ein verbindungsloses Internet-Transportprotokoll, das auf IP aufsetzt. Die Messpakete enthalten u.a. Zeitstempel und Sequenznummern.

Kurz bevor von dem ersten Messrechner 28 das erste Bit des Messpakets gesendet wird, erfolgt die Auslesung/Setzung des sogenannten Sendezeitstempels. Dieser Wert des Sendezeitstempels, also die Uhrzeit des Ausgangs des Messpaketes, wird zusammen mit dem Messpaket zu dem zweiten Messrechner 36 übertragen. Der Eingang des Messpaketes bei dem zweiten Messrechner 36 wird erfasst. Dabei wird, kurz nachdem das letzte Bit des Testpaketes bei dem zweiten Messrechner 36 empfangen wurde, ein sogenannter Empfangszeitstempel erzeugt.

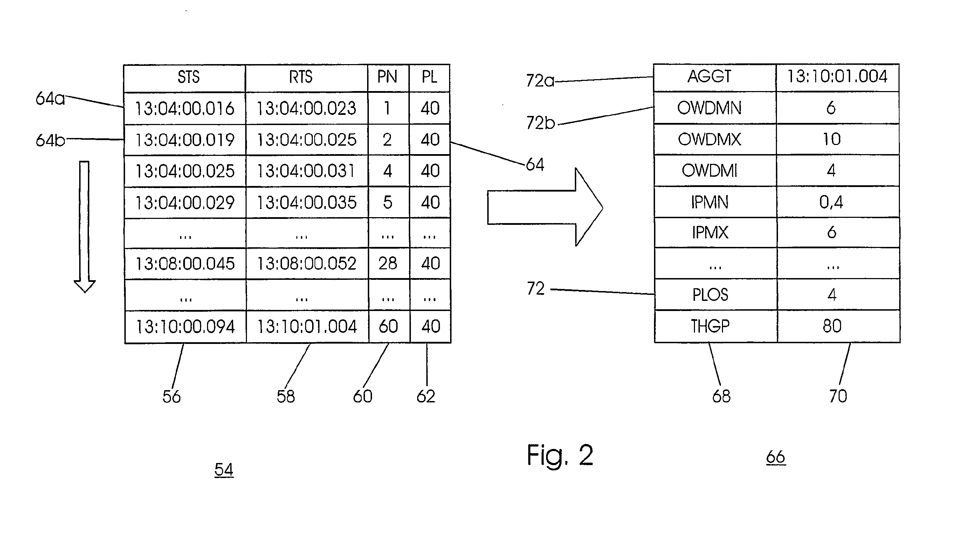

In Fig. 2 ist in einer schematischen Darstellung der Prozess der Zusammenfassung der Messdaten zu Kenngrößen dargestellt. In der in Fig. 2 linken Tabelle 54 sind die Messdaten aufgelistet. Die Tabelle 54 der Messdaten besteht aus vier Spalten 56, 58, 60 und 62. Die Tabelle 54 besteht aus 56 Zeilen 64, wobei aus Gründen der Übersicht nur wenige dargestellt sind. Insgesamt wurden 60 Messpakete verschickt. 4 davon sind verloren gegangen und werden als Paketverlust gewertet. Die Tabelle 54 entspricht den Messdaten in einem Zeitintervall, das im vorliegenden Fall rund sechs Minuten umfasst.

In der ersten Spalte 56 sind untereinander von oben nach unten die Sendezeitstempel, also die Uhrzeit des Ausgang des Messpakets, dargestellt. In der zweiten Spalte 58 sind die Empfangszeitstempel beim zweiten Messrechners 36 dargestellt, ebenfalls in ihrer Reihenfolge fortlaufend von oben nach unten. In der dritten Spalte 60 der Tabelle 54 der Messdaten ist die jeweilige Nummer des Messpaketes fortlaufend von oben nach unten eingetragen. Die vierte Spalte 62 zeigt die Länge des Messpaketes an. Beispielsweise ist in der zweiten Zeile 64a der Sendezeitstempel 13:04:00.016, der Empfangszeitstempel 13:04:00.023, die Nummer des Messpaketes, nämlich 1, sowie die Länge des Messpaketes, nämlich 40, zu entnehmen.
In der dritten Zeile 64b folgen die Daten des zweiten Messpaketes usw. 56 Messpakete insgesamt sind in dem vorliegenden Beispiel in einem Zeitintervall enthalten. Es fallen somit 224 Werte an. Aus diesen 224 Werten werden durch Zuordnung zu Kenngrößen 8 Werte gebildet, also durch Aggregierung für dieses Zeitintervall die in der Tabelle 66 dargestellten Kenngrößen gebildet.

Die Tabelle 66 der Kenngrößen besteht aus zwei Spalten 68 und 70. Die Tabelle 66 besteht aus neun Zeilen 72, wobei acht Zeilen 72 den Kenngrößen zugeordnet sind und in der ersten Zeile 72a die Aggregierungszeit eingetragen ist. Diese Aggregierungszeit ermöglicht eine zeitliche Zuordnung der berechneten Kenngrößen zu den ursprünglichen Messdaten. In der ersten Spalte 68 ist jeweils die Art der Kenngröße aufgeführt und in der zweiten Spalte der Wert dieser Kenngröße.

In der zweiten Zeile 72b der Tabelle 66 ist die durchschnittliche Einwegverzögerung - OWDMN mean one-way delay - in dem den Messdaten der Tabelle 54 zugeordneten zeitintervall aufgeführt. Die dritte Zeile hat die maximale Einwegverzögerung - OWDMX max. one-way delay, die vierte Zeile die minimale Einwegverzögerung - OWDMI min. one-way delay, die fünfte Zeile die durchschnittliche Laufzeitschwankung - IPMN mean IP-delay variation, die sechste Zeile die maximale Laufzeitschwankung - IPMX max. IP-delay variation, die siebte Zeile weitere statistische Daten, wie Standardabweichung usw., die achte Zeile die Paketverluste - PLOS packet loss, die neunte Zeile den Durchsatz - THGP throughput, für die in Tabelle 54 dargestellten Messdaten eines zeitintervalls zum Gegenstand. Hieraus wird deutlich, dass statt der 224 Werte der Tabelle 54 nur noch acht Werte zusammen mit der Aggregierungszeit von dem zweiten Messrechner 36 an den Steuerrechner 50 übertragen werden, sodass die Menge an Messdaten auf einfache Weise erheblich verringert wird.

Die Erfindung zeichnet sich durch ein einfaches Aggregierungsverfahren aus, das alle für die Qualitätsüberwachung eines Netzes notwendigen Daten überträgt, um damit einen schnellen Überblick über die Qualitätssituation im Netz zu erhalten.

### B E Z U G S Z E I C H E N L I S T E

- 10: Telekommunikationsnetz
- 12: Vermittlungseinrichtung
- 14: Vermittlungseinrichtung
- 16: Vermittlungseinrichtung
- 18: Vermittlungseinrichtung
- 20: Vermittlungseinrichtung
- 22: Vermittlungseinrichtung
- 24: Vermittlungseinrichtung
- 26: Verbindungsleitungen
- 28: erster Messrechner
- 30: Satelliten
- 32: GPS-Antenne erster Messrechner
- 34: lokale Uhr des ersten Messrechners
- 36: zweiter Messrechner
- 38: GPS-Antenne des zweiten Messrechners
- 40: lokale Uhr des zweiten Messrechners
- 42: GPS-Antenne dritter Messrechner
- 44: lokale Uhr des dritten Messrechners
- 46: dritter Messrechner
- 48: Messstrecke zwischen erstem und zweitem Messrechner
- 50: Steuerrechner
- 52: Datenbank
- 54: Tabelle der Messdaten
- 56: erste Spalte
- 58: zweite Spalte
- 60: dritte Spalte
- 62: vierte Spalte
- 64: zeile
- 64a: zweite Zeile
- 64b: dritte Zeile
- 66: Tabelle der Kenngrößen
- 68: erste Spalte
- 70: zweite Spalte
- 72: Zeile
- 72a: erste Zeile
- 72b: zweite zeile

## Patentansprüche

1. Verfahren zur Übertragung von Messdaten von einem Messrechner (28, 36, 46) zu einem Steuerrechner (50) eines Messsystems, wobei der Messrechner (28, 36, 46) und der Steuerrechner (50) über ein Telekommunikationsnetz (10) miteinander verbunden sind, zur Reduzierung der Menge an Messdaten diese über ein vorbestimmtes Zeitintervall zu Kenngrößen zusammengefasst und statt der Messdaten diese Kenngrößen von dem Messrechner (28, 36, 46) an den Steuerrechner (50) übertragen werden, **dadurch gekennzeichnet, dass** zwischen zwei Messrechnern (28, 36, 46) Messpakete, insbesondere User Datagram Protocoll UDP-Messpakete , übertragen werden, dass der eine Messrechner (28, 36, 46) als Sender und der andere Messrechner (28, 36, 46) als Empfänger arbeitet, wobei der andere Messrechner (28, 36, 46) die Zusammenfassung der Messdaten zu Kenngrößen vornimmt und diese an den Steuerrechner (50) überträgt, und dass als Kenngrößen die durchschnittliche Einwegverzögerung, die maximale und die minimale Einwegverzögerung, die Standardabweichung der Einwegverzögerung, die durchschnittliche Laufzeitschwankung, die maximale Laufzeitschwankung und/oder die Standardabweichung der Laufzeitschwankung.

2. Verfahren nach Anspruch 1, **dadurch gekennzeichnet, dass** der Paketverlust und/oder der Durchsatz aus den Messdaten gebildet werden.

3. Verfahren nach Anspruch 1 oder 2, **dadurch gekennzeichnet, dass** zu mehreren Messparametern Messdaten anfallen, die entsprechend dem jeweiligen Messparameter zu Kenngrößen zusammengefasst werden.

4. Verfahren nach einem der vorangehenden Ansprüche, **dadurch gekennzeichnet, dass** das Zeitintervall für die Zusammenfassung von Messdaten in Abhängigkeit des Messverfahrens festgelegt wird.

5. Verfahren nach einem der vorangehenden Ansprüche, **dadurch gekennzeichnet, dass** bei der Ermittlung von Messpaketverlusten in einem Zeitintervall als Kenngröße zum einen die Summe aller verloren gegangenen Pakete erfasst wird und zum anderen jeweils das Maximum aller nacheinander auftretenden Paketverluste als Kenngröße erfasst wird - Bursts

6. Verfahren nach Anspruch einem der vorangehenden Ansprüche, **dadurch gekennzeichnet, dass** ein Messsystem verwendet wird, das zur Ermittlung von u-nidirektionalen Übertragungseigenschaften und deren ableitbaren Ergebnissen dient.

7. Verfahren nach einem der vorangehenden Ansprüche, **dadurch gekennzeichnet, dass** den Kenngrößen der Zeitpunkt der Zusammenfassung der Messdaten zu Kenngrößen zugeordnet wird.

8. Anordnung zur Durchführung des Verfahrens nach einem der vorangehenden Ansprüche.

## Claims

1. Method for transmitting measured data from a measurement computer (28, 36, 46) to a control computer (50) of a measurement system, wherein the measurement computer (28, 36, 46) and the control computer (50) are connected to one another through a telecommunications network (10), summarize the measured data into characteristic quantities over a predefined interval to reduce the quantity of measured data, and in place of the measured data transmit these characteristic quantities from the measurement computer (28, 36, 46) to the control computer (50), **characterized in that** measurement packets, in particular UDP <user datagram protocol> measurement packets, are transmitted between two measurement computers (28, 36, 46), **in that** the one measurement computer (28, 36, 46) operates as the transmitter and the other measurement computer (28, 36, 46) operates as the receiver, wherein the other measurement computer (28, 36, 46) carries out the summarization of the measured data into characteristic quantities and transmits the latter to the control computer (50), and **in that** the average one-way delay, the maximum and minimum one-way delay, the standard deviation of the one-way delay, the average variation in transit time, the maximum transit time variation, the minimum transit time variation and/or the standard deviation of the transit time variation as characteristic quantities.

2. Method according to claim 1, **characterized in that** the packet loss and/or the throughput are determined from the measured data.

3. Method according to any one of claims 1 or 2, **characterized in that** measured data occur for multiple measurement parameters, which data are summarized into characteristic quantities according to the respective measurement parameter.

4. Method according to any one of the preceding claims, **characterized in that** the time interval for the summarization of measured data is determined as a function of the measurement process.

5. Method according to any one of the preceding claims, **characterized in that** as part of the determination of measurement packet losses during a time interval, on the one hand the sum of all lost packets is determined as a characteristic quantity, and on the other hand the maximum in each case of all contiguously occurring packet losses - bursts - is also determined as a characteristic quantity.

6. Method according to any one of the preceding claims, **characterized in that** a measurement system that serves to determine unidirectional transmission characteristics and their derivable results is used.

7. Method according to any one of the preceding claims, **characterized in that** the point in time at which the measured data are summarized into characteristic quantities is assigned to the characteristic quantities.

8. Device for carrying out the method according to any one of the preceding claims.

## Revendications

1. Procédé de transmission de données de mesure depuis un calculateur de mesure (28, 36, 46) vers un calculateur de commande (50) d'un système de mesure, le calculateur de mesure (28, 36, 46) et le calculateur de commande (50) étant interconnectés par l'intermédiaire d'un réseau de télécommunications (10), les données de mesure étant combinées en grandeurs caractéristiques sur un intervalle de temps prédéterminé pour réduire leur quantité, et lesdites grandeurs caractéristiques étant transmises au calculateur de commande (50) par le calculateur de mesure (28, 36, 46) à la place des données de mesure, **caractérisé en ce que** des paquets de mesure, notamment des paquets de mesure UDP (User Datagram Protocol) sont transmis entre deux calculateurs de mesure (28, 36, 46), l'un des calculateurs de mesure (28, 36, 46) fonctionne comme émetteur et l'autre calculateur de mesure (28, 36, 46) fonctionne comme récepteur, l'autre calculateur de mesure (28, 36, 46) combinant les données de mesure en grandeurs caractéristiques et transmettant celles-ci au calculateur de commande (50), et le délai unidirectionnel moyen, le délai unidirectionnel maximal et minimal, l'écart-type du délai unidirectionnel, la variation moyenne du temps de propagation, la variation maximale du temps de propagation et/ou l'écart-type de la variation du temps de propagation sont transmis en tant que grandeurs caractéristiques.

2. Procédé selon la revendication 1, **caractérisé en ce que** la perte de paquet et/ou le débit sont formés à partir des données de mesure.

3. Procédé selon la revendication 1 ou 2, **caractérisé en ce qu'il** y a des données de mesure pour plusieurs paramètres de mesure, lesdites données de mesure étant combinées en grandeurs caractéristiques suivant le paramètre de mesure respectif.

4. Procédé selon l'une des revendications précédentes, **caractérisé en ce que** l'intervalle de temps pour la combinaison de données de mesure est déterminé en fonction de la méthode de mesure.

5. Procédé selon l'une des revendications précédentes, **caractérisé en ce que**, lors de la détermination de pertes de paquets de mesure dans un intervalle de temps, la somme de l'ensemble des paquets perdus est détectée comme grandeur caractéristique, d'une part, et le maximum des pertes de paquets successives est détecté chaque fois comme grandeur caractéristique, d'autre part - bursts.

6. Procédé selon l'une des revendications précédentes, **caractérisé en ce qu'**on utilise un système de mesure servant à la détermination de propriétés de transmission unidirectionnelle et de leurs résultats déductibles.

7. Procédé selon l'une des revendications précédentes, **caractérisé en ce que** le moment de la combinaison des données de mesure en grandeurs caractéristiques est associé aux grandeurs caractéristiques.

8. Dispositif pour la mise en oeuvre du procédé selon l'une des revendications précédentes.
